Europäisches Patentamt

European Patent Office

Office européen des brevets

(11) Numéro de publication: **0 410 833 A1**

## (12) DEMANDE DE BREVET EUROPEEN

(21) Numéro de dépôt: **90401951.0**

(22) Date de dépôt: **05.07.90**

(51) Int. Cl.⁵: **B23P 19/04**, B62D 65/00, B23Q 7/14

(30) Priorité: **27.07.89 FR 8910125**

(43) Date de publication de la demande:
**30.01.91 Bulletin 91/05**

(84) Etats contractants désignés:
**BE DE ES GB IT**

(71) Demandeur: **RENAULT AUTOMATION**
**8/10 avenue Emile Zola**
**F-92109 Boulogne-Billancourt(FR)**

(72) Inventeur: **Dupuis, Claude**
**40, Ter, Chemin des Mignotteries**
**F-78620 L'Etang-La-Ville(FR)**

(74) Mandataire: **Ernst-Schonberg, Michel**
**REGIE NATIONALE DES USINES RENAULT (S.**
**0267) 8 & 10, avenue Emile Zolaola**
**F-92109 Boulogne Billancourt Cédex(FR)**

(54) **Procédé et dispositif de manutention robotisé.**

(57) Procédé et dispositif de manutention robotisé de pièces dont le poids dépasse les capacités du robot de manutention (6), notamment pour le positionnement et l'assemblage sur une caisse de véhicule (2), liée à une chaîne de convoyage (1), avec un poste de travail fixe ou animé d'un mouvement de déplacement continu.

Fig. 1

EP 0 410 833 A1

## PROCEDE ET DISPOSITIF DE MANUTENTION ROBOTISE

La présente invention est relative à un procédé et dispositif de manutention robotisé de pièces lourdes et encombrantes pour leur assemblage sur une caisse de voiture par exemple.

Habituellement, ces pièces sont :
- soit présentées manuellement à leur emplacement et fixées par les opérateurs qui utilisent à cet effet des outillages portatifs,
- soit déposées sur un outillage spécifique monté en bord de chaîne et qui en assure le montage (un "Dispositif et procédé de pose automatique d'un élément de vitrage d'une garniture et pavillon ou analogue" fait l'objet d'un brevet français déposé le 06.08.1981 sous le numéro 81-15266 au nom de la REGIE NATIONALE DES USINES RENAULT),
- soit déposées sur un montage déplacé manuellement pour se présenter sous la caisse comme les montages de présentation des trains arrières ou des groupes moto-propulseurs.

Les solutions décrites utilisent des moyens quelquefois très automatisés, mais toujours à base de machines spécifiques.

Le procédé décrit, propose la manutention par un robot du commerce, de pièces dont le poids dépasse les capacités de charge dudit robot. Pour ce faire, le robot manipule un outillage qui porte la pièce et qui est équilibré de façon à compenser le poids de ladite pièce.

A cet effet, il propose un poste d'assemblage qui comprend principalement, suivant une particularité essentielle :
- un robot préférentiellement à six degrés de liberté et équipé de sa baie de commande,
- un outillage équilibré sur lequel est déposé la pièce à manutentionner: cet outillage est manipulé par le robot,
- un poste de chargement des pièces sur l'outillage équilibré à l'aide d'un chargeur spécifique ou du robot,
- un poste d'engagement sur la chaîne du montage de l'outillage équilibré,
- un poste de dégagement par le robot du montage équilibré,
- une zone de travail.

Cette description s'applique aux chaînes d'assemblage animées d'un mouvement d'avance continu. Lorsque le mouvement d'avance est discontinu, l'assemblage se fait à vitesse nulle de la chaîne et le poste de dégagement du montage équilibré est confondu avec le poste d'engagement du montage équilibré.

Les figures annexées illustrent l'invention.
- **La figure 1** représente un montage équilibré pour la manutention d'une planche de bord, associé à un robot de manutention.

- **La figure 2** représente une prespective d'une chaîne à mouvement d'avance continu pour l'assemblage des planches de bord dans l'habitacle d'une automobile.

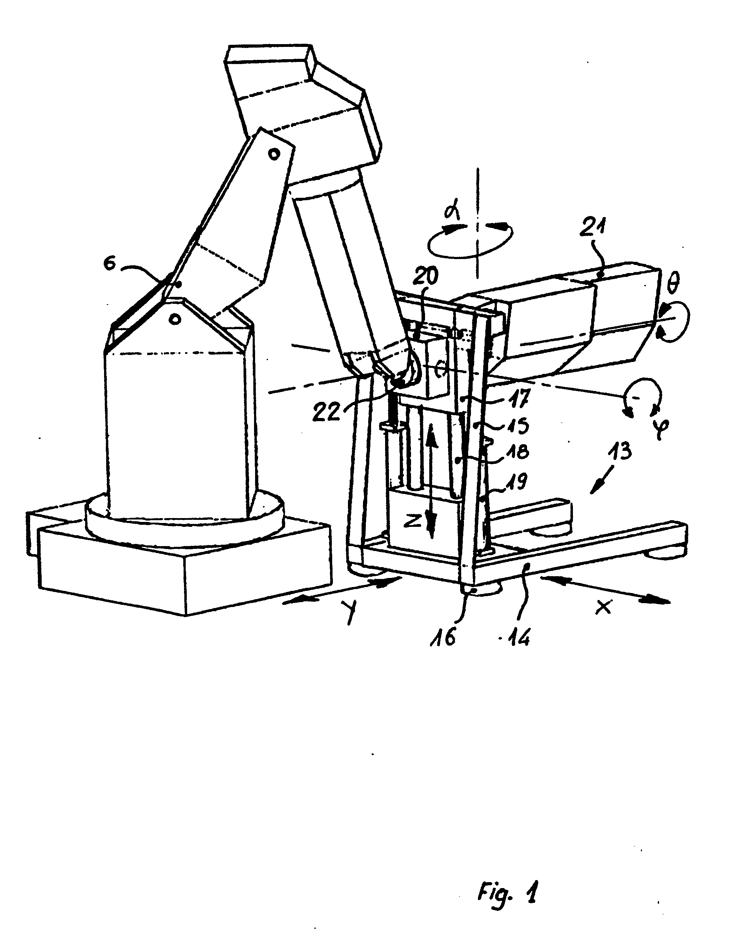

Le montage équilibré tel que représenté sur la figure 1 est destiné à permettre la manutention, par un robot multi-axes du commerce, d'une pièce dont le poids dépassse les capacités de charge du robot. Il doit permettre l'introduction de la pièce dans une zone peu accessible et, selon les cas, permettre également sa fixation sur son support (comme une caisse de voiture). On peut imaginer facilement la complexité de la trajectoire que doit suivre la pièce pour être présentée à sa position finale dans un milieu encombré. Si la force du robot n'est pas suffisante pour manipuler la pièce, l'invention propose de déposer cette dernière sur un support qui peut occuper toutes les positions dans un espace défini et qui est équilibré afin de ne pas imposer de force de manipulation autre que les forces d'inertie.

Un bâti 13 constitué d'une base 14 et d'un support vertical 15 s'appuie sur le sol par l'intermédiaire de patins à coussin d'air 16. Les patins à coussin d'air 16 laissent toute liberté de déplacement sans effort, au bâti 13 selon les directions orthogonales X et Y ainsi qu'à la rotation $\alpha$. Un coulisseau 17 guidé par un moyen connu 18 et équilibré 19 permet le déplacement selon Z d'un bloc 20 qui porte le support de pièce 21. Le support de pièce 21 est agencé de façon à s'orienter selon deux axes de rotation orthogonaux, $\theta$ et $\phi$ eux-mêmes équilibrés (l'équilibrage n'étant pas primordial).

Le robot multi-axes 6 est relié par son poignet 22 au bloc 20. L'association présentée permet de manipuler, dans toutes les directions, la pièce fixée sur le support 21.

Par sa forme, le bâti 13 représenté sur la figure 1, s'adapte bien a l'introduction d'une pièce comme une planche de bord à l'intérieur d'une caisse de voiture.

Selon une forme de réalisation, le montage 21 peut être équipé de moyens de localisation et de bridage de la pièce qu'il est destiné à recevoir.

Il peut également être équipé de dispositifs, comme des visseuses, pour fixer la pièce là où elle doit être montée, ce qui évite la création et l'emploi d'un outillage spécifique complémentaire au dispositif de manutention.

Il peut également être équipé de moyens de localisation et de solidarisation avec la caisse. Dans ce cas, la tâche du robot consiste à manutentionner l'ensemble du montage équilibré équipé de la pièce à assembler, pour le présenter avec précision là où l'assemblage doit se faire. Il est alors avantageux que le robot puisse se désaccoupler du montage équilibré pour effectuer d'autres taches. Un jeu de préhenseurs 7, 10, adaptés à ces différentes tâches comme la manipulation des pièces, la manipulation des montages équilibrés etc..., s'adaptent sur le poignet par des moyens connus par ailleurs.

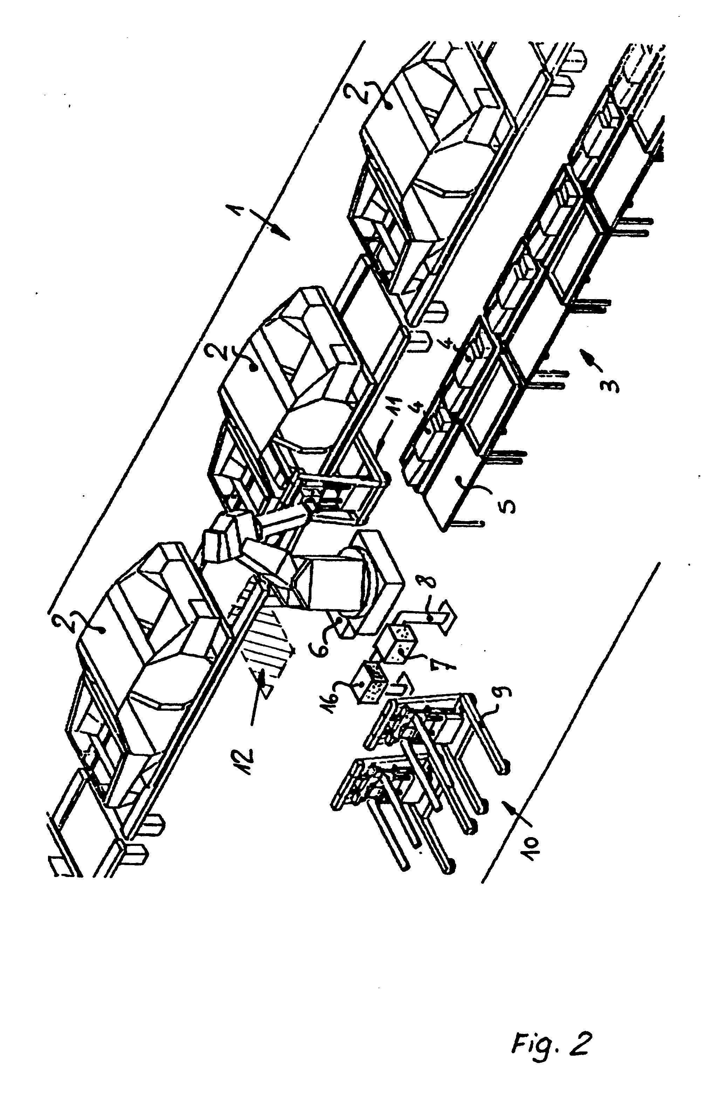

Le montage des tableaux de bord sur une chaîne principale de finition 1 automobile, est représenté sur la figure 2. Les caisses des véhicules 2 sont transférées avec un mouvement d'avance continu ou discontinu. Une chaîne de préparation 3 des planches de bord 4 est installée parallèlement à la chaîne principale 1. La planche de bord 4 terminée est localisée sur un poste de préhension 5. Un robot multi-axes 6 s'accouple au niveau de son poignet avec un préhenseur de pièces 7 en attente sur un ratelier 8. Le robot équipé du préhenseur de pièces 7 saisit la planche de bord 4 et la dépose sur un outillage équilibré 9 en attente sur une zone de stockage 10. Le préhenseur de pièces 7 libère la planche de bord 4 et le robot 6 va déposer ledit préhenseur à sa place sur le ratelier 8. Le robot s'accouple ensuite de la même façon à un préhenseur d'outillage équilibré 9 et peut alors déplacer et présenter l'ensemble du montage équilibré 9 avec la pièce 4 vers la zone de travail 11.

Un ensemble de capteurs mesure la position de la caisse 2 suivant les deux translations X et Y et la rotation $\alpha$ dans le plan horizontal par rapport au référentiel robot.

Deux capteurs embarqués mesurent les efforts entre le montage équilibré et le robot.

Il est ainsi possible au robot, grâce à ces fonctions de recalage, de guider le montage équilibré 9 et de l'accrocher à la caisse 2 avant de se désaccoupler pour effectuer d'autres tâches comme le dégagement d'un outillage 12 vide ou le chargement d'une pièce sur un outillage équilibré, ou encore une opération complémentaire comme une fixation particulière.

Selon une variante , les caisses des véhicules 2 peuvent être transférées d'une façon discontinue : elles sont alors immmobiles sur le poste de travail 11 et le poste de déchargement 12 est confondu avec le poste de chargement 11.

Selon une autre variante, le même préhenseur peut charger la pièce 4 sur l'outillage 13 et manipuler ledit montage pour le présenter à son poste de travail 11. Dans ce cas, le ratelier 8 n'existe pas.

**Revendications**

1. Procédé et dispositif de manutention robotisé de pièces liées à un montage de présentation dont le poids dépasse les capacités du robot de manutention (6), notamment pour le positionnement et l'assemblage sur une caisse de véhicule (2) liée à une chaîne de convoyage (1) animée d'un mouvement de déplacement qui peut être continu, caractérisé en ce qu'il comprend :
- 1 robot de manutention (6) avec sa baie de commande,
- 1 outillage équilibré (10),
- 1 poste de chargement des pièces sur un outillage équilibré (5),
- 1 poste d'engagement de l'outillage équilibré équipé des pièces à assembler (11),
- 1 zone de travail (11),
- 1 poste de dégagement de l'outillage équilibré après l'assemblage de la pièce (12).

2. Procédé et dispositif de manutention robotisé selon la revendication 1, caractérisé en ce que la zone de travail (11) est équipée de capteurs qui transmettent en continu la position de la caisse par rapport au référentiel du robot (6).

3. Procédé et dispositif de manutention robotisé selon les revendications 1 et 2, caractérisé en ce que le poignet du robot s'accouple avec un préhenseur d'outillage équilibré et que ce préhenseur peut comporter un dispositif élastique pour protéger le poignet du robot de l'inertie du montage équilibré.

4. Procédé et dispositif de manutention robotisé selon les revendications 1 et 2, caractérisé en ce que le poignet (22) du robot (6) s'accouple avec un préhenseur de pièce (7) (pour charger ladite pièce sur l'outillage équilibré) et avec un préhenseur d'outillage équilibré (10) (pour manoeuvrer ledit outillage afin de positionner la pièce qu'il porte à son emplacement de fixation).

5. Procédé et dispositif de manutention robotisé selon les revendications 1 et 2, caractérisé en ce que le poignet (22) du robot (6) s'accouple avec un outillage permettant la fixation de la pièce à assembler sur la caisse du véhicule, ledit outillage pouvant être une visseuse ou tout autre appareil approprié au mode de fixation.

6. Procédé et dispositif de manutention robotisé selon les revendications 1, 3, 4, 5, caractérisé en ce que l'outillage équilibré (13) comporte :
- 1 support de base inerte (14) équipé d'un dispositif, comme des coussins d'air (16), qui lui permet de se déplacer sur le sol avec un minimum d'effort,
- 1 support de pièce (21), lui aussi inerte, guidé et équilibré sur le support de base (14).

7. Procédé et dispositif de manutention robotisé selon la revendication 6, caractérisé en ce que le support de base (14) peut se déplacer selon :
- 1 direction (X) parallèle au sol et parallèle à l'axe longitudinal de la chaîne d'assemblage,
- 1 direction (Y) parallèle au sol et parallèle à l'axe transversal de la chaîne d'assemblage,
et que le support de pièce (21) peut se déplacer par rapport au support de base selon :
- 1 direction (Z) verticale,
- 1 rotation ($\alpha$) autour de l'axe vertical (Z),
- 1 rotation ($\phi$) autour de l'axe longitudinal (X),
- 1 rotation ($\theta$) autour de l'axe transversal (Y).

8. Procédé et dispositif de manutention robotisé selon les revendications 6 et 7, caractérisé en ce que l'outillage équilibré (13) est muni :
- de capteurs pour déterminer sa position par rapport à la caisse,
- de moyens comme des pilotes, lui permettant de se localiser mécaniquement sur la caisse,
- de moyens comme des verrous lui permettant de s'accrocher mécaniquement sur la caisse.

9. Procédé et dispositif de manutention robotisé selon les revendications 6, 7, 8, caractérisé en ce que le support de pièces (21) de l'outillage équilibré est muni :
- de moyens comme des pilotes ou des drageoirs permettant le positionnement de la pièce sur le support de pièces,
- de moyens de bridage automatique de la pièce sur le support de pièces,
- de moyens de manoeuvre comme des visseuses ou des riveteuses pour la liaison de la pièce sur la caisse.

Fig. 1

EP 0 410 833 A1

Fig. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | WERKSTAT & BETRIEB<br>vol. 118, no. 7, juillet 1985, MUNICH, RFA<br>pages 379 - 383; FUCHS ET SUNNER:<br>"Einführen der Modul-Fertigungstechnik für die<br>Montagebänder der Automobilindustrie"<br>* page 382, colonne de droite, lignes 1 - 19;<br>figures 9, 10 *<br>--- | 1 | B23P19/04<br>B62D65/00<br>B23Q7/14 |
| A | EP-A-81656 (OPEL)<br>* figure 6 *<br>--- | 1 | |
| P,A | GB-A-2213110 (HONDA)<br>& JP-A-1145284 (publ. date 7-6-1989)<br>----- | | |

| DOMAINES TECHNIQUES RECHERCHES (Int. Cl.5 ) |
|---|
| B23P<br>B62D<br>B23Q<br>B65G<br>B66F<br>B25H |

Le présent rapport a été établi pour toutes les revendications

| Lieu de la recherche | Date d'achèvement de la recherche | Examinateur |
|---|---|---|
| LA HAYE | 19 SEPTEMBRE 1990 | RIS M. |

EPO FORM 1503 03.82 (P0402)